# EUROPEAN PATENT APPLICATION

(11) **EP 2 836 041 A1**
(43) Date of publication of application: **11.02.2015**
(21) Application number: 13306133.3
(22) Date of filing: 07.08.2013
(51) Int. Cl.: H04W 72/04, H04W 72/08

(54) **Wireless telecommunications network nodes and methods**

(71) Applicant: ALCATEL LUCENT, 92100 Boulogne-Billancourt (FR)
(72) Inventor: Wong, Shin Horng, Swindon, Wiltshire SN5 7DJ (GB); Puddle, Nicola, Swindon, Wiltshire SN5 7DJ (GB)
(74) Representative: Leppard, Andrew John

(57) **Abstract**

Wireless telecommunications network nodes, methods and computer program products are disclosed. A small cell base station method comprises detecting an increase in interference from user equipment being supported by a serving base station; and transmitting an instruction to cause the serving base station to instruct the user equipment to reduce its transmission resource to reduce the interference. This reduction in these resources may lead to a reduction in the interference. In this way, it is possible for the base station which is experiencing the interference caused by the user equipment being supported by another base station to instruct that serving base station to instruct the user equipment being served by that base station to reduce its transmission resources in order to reduce interference.

## Description

### FIELD OF THE INVENTION

The present invention relates to wireless telecommunications network nodes, methods and computer program products.

### BACKGROUND

Wireless telecommunication networks are known. In such networks, mobile communication devices (for example, mobile telephones) are operable to communicate with base stations provided by network providers.

In known wireless telecommunication networks, radio coverage is provided to network connectable devices, such as mobile telephones, or wireless devices such as tablets, within areas known as cells. A base station is located in each cell to provide radio coverage. Typically, network connectable devices in each cell are operable to receive information and data from a base station and to transmit information and data to a base station.

User equipment roam through the wireless communications network. Base stations are typically provided which support areas of radio coverage. A number of such base stations are provided and are distributed geographically in order to provide a wide area of coverage to user equipment.

When user equipment is within an area served by a base station, communications may be established between the user equipment and the base station over associated radio links.

Traditional base stations provide coverage in relatively large geographical areas and those cells are often referred to as macro cells. It is possible to provide a heterogeneous network (HetNet) where smaller-sized cells are provided within macro cells. Such smaller sized cells are sometimes referred to as low-power nodes (LPN), micro cells, pico cells or femto cells. One way to establish a small cell is to provide a small cell base station that provides coverage having a relatively limited range within the coverage area of the macro cell. The transmission power of a small cell base station is relatively low and, hence, each small cell provides a small coverage area compared to that of a macro cell and covers, for example, an office or a home.

Such small cells are typically provided where the communications coverage provided by the macro cell is poor or where a user wishes to use an alternative communications link provided locally, by the small cell base station, to communicate with the core network, and/or to increase capacity within a network.

Deployment of small cells in a wireless communication network can assist a network in relation to handling capacity in high traffic areas, for example, so-called hot spot areas. An ability to offload traffic to a small cell or cells located in a high traffic area of a network may be particularly useful to a network operator.

Although HetNet deployments may offer advantages, unexpected consequences of such deployments may occur. It is desired to address those consequences.

### SUMMARY

According to a first aspect, there is provided a small cell base station method, comprising: detecting an increase in interference from user equipment being supported by a serving base station; and transmitting an instruction to cause the serving base station to instruct the user equipment to reduce its transmission resource to reduce the interference.

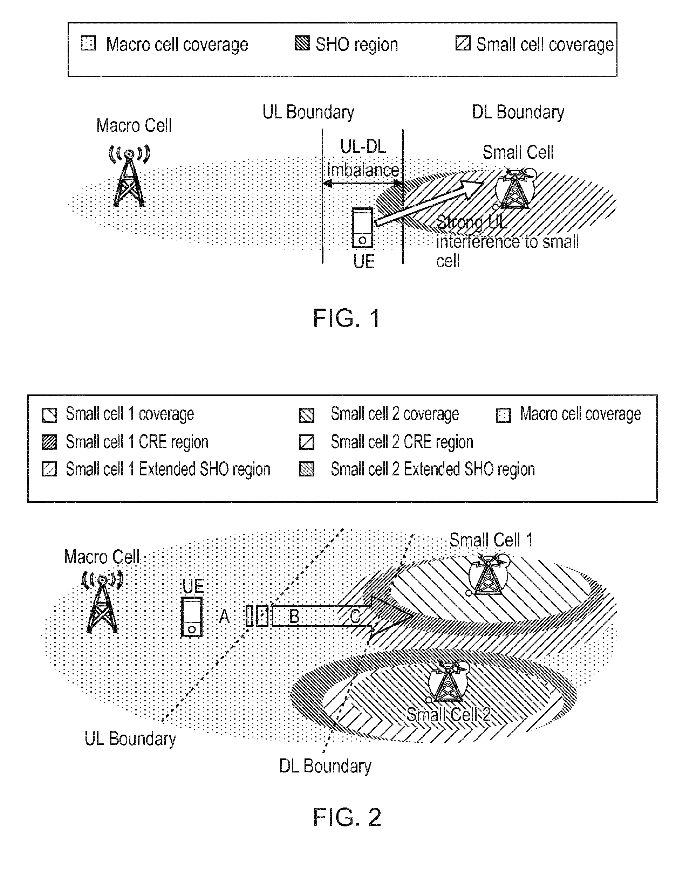

The first aspect recognises that in a HetNet deployment with a macro cell and a small cell such as that illustrated in Figure 1, the uplink (UL) boundary is where the user equipment uplink path loss to the macro cell and to the small cell are the same. The downlink (DL) boundary is where the received pilot power from the macro cell and the received pilot power from the small cell are the same at the user equipment. In a homogeneous network (i.e. macro cell only deployment), the UL and DL boundaries are at the same location. However, in HetNet deployment, the small cell has a lower transmit power than that of the macro cell. As a consequence of this, the UL and DL boundaries are different in HetNet as shown in Figure 1. The region between the UL and DL boundaries are referred to as the UL-DL imbalance region.

The first aspect also recognises that user equipment in the UL-DL imbalance region connected to the macro cell as shown in Figure 1 will create strong interference to the small cell. This scenario is applicable to long term evolution (LTE) and universal mobile telephone system (UMTS) networks. In UMTS, the strong uplink interference will occur if this user equipment is not in the soft handover (SHO) region as shown in Figure 1.

In an enhancement to a CELL_FACH feature (Release 11), a common Enhanced Dedicated Channel (E-DCH) Relative Grant Channel (E-RGCH) is introduced. With this feature, the user equipment listens for common E-RGCH broadcast from neighbouring cells. In this way, a neighbour cell experiencing high interference is able to reduce its interference by reducing the grants of neighbour user equipment at the cell edge. In the absence of SHO in CELL_FACH common E-RGCH provides a means for neighbour cells to control its interfering neighbouring user equipment. Although SHO is available in CELL-DCH, it is proposed to introduce common E-DCH for CELL_DCH in HetNets. This is due to the presence of the UL-DL imbalance region in the HetNet causing the small cell to experience high interference in the region between the UL boundary and the start of the SHO region (see Figure 1).

Consider the user equipment in Figure 1 where it lies between the UL boundary and the SHO region. This user equipment causes UL interference to the small cell, where the broadcast of common E-RGCH is beneficial to the small cell in reducing the interference from this user equipment. Since common E-RGCH is used for user equipment not in SHO, the downlink signal (i.e. the common E-RGCH) from the small cell may not reach the user equipment. If the small cell downlink signal is sufficiently strong for this user equipment, the user equipment may already entered SHO in which case, common E-RGCH is not useful since the legacy dedicated E-RGCH can be used. Accordingly, the first aspect recognises that it is desirable to enable the user equipment to receive the common E-RGCH from the small cell in the regions between the UL boundary and the conventional SHO region.

Accordingly, a base station method may be provided. The method may be for a small cell base station or low power node. The method may comprise the step of detecting an increase in interference caused by user equipment being supported by another base station acting as a serving base station for that user equipment. The method may also comprise the step of transmitting an instruction which causes the another or serving base station to instruct or command the user equipment to reduce the resources being used for transmissions. This reduction in these resources may lead to a reduction in the interference. In this way, it is possible for the base station which is experiencing the interference caused by the user equipment being supported by another base station to instruct that serving base station to instruct the user equipment being served by that base station to reduce its transmission resources in order to reduce interference.

In one embodiment, the user equipment is being served by other than the small cell base station.

In one embodiment, the step of transmitting comprises transmitting the instruction to one of a radio network controller, a mobility management entity to determine the serving base station and to the serving base station. Accordingly, the instruction may be transmitted to any number of different network nodes for onward transmission to the serving base station, or may be transmitted directly to the serving base station itself.

In one embodiment, the instruction indicates a resource reduction to be applied to transmissions from the user equipment. Accordingly, the instruction may indicate an amount of reduction in resources that is required. This may be based on the amount of interference being experienced by the small cell base station.

In one embodiment, the instruction specifies a reduction in grant for the user equipment. Accordingly, a grant reduction may be specified. This provides a convenient mechanism to reduce the amount of resources being utilised in order to reduce interference.

In one embodiment, the instruction includes an identifier identifying the small cell base station. Accordingly, the instruction may be associated with an identifier which may identify the small cell base station. This enables the user equipment to make an assessment of whether it needs to obey the instruction or not.

In one embodiment, the method comprises the steps of receiving an instruction initiated by another small cell base station experiencing an increase in interference from user equipment being supported by the serving base station, and transmitting a resource control instruction to the user equipment to cause the user equipment to reduce its transmission resource to reduce the interference. Accordingly, the small cell base station may also receive an instruction initiated by another base station and transmit a resource control instruction to user equipment in order to cause the user equipment to reduce resources being utilised for transmission in order to reduce interference.

According to a second aspect, there is provided a small cell base station, comprising: detection logic operable to detect an increase in interference from user equipment being supported by a serving base station; and transmission logic operable to transmit an instruction to cause the serving base station to instruct the user equipment to reduce its transmission resource to reduce the interference.

In one embodiment, the user equipment is being served by other than the small cell base station.

In one embodiment, the transmission logic is operable to transmit the instruction to one of a radio network controller, a mobility management entity to determine the serving base station and to the serving base station.

In one embodiment, the instruction indicates a resource reduction to be applied to transmissions from the user equipment.

In one embodiment, the instruction specifies a reduction in grant for the user equipment.

In one embodiment, the instruction includes an identifier identifying the small cell base station.

In one embodiment, the small cell base station comprises reception logic operable to receive an instruction initiated by another small cell base station experiencing an increase in interference from user equipment being supported by the serving base station, and wherein the transmission logic is operable to transmit a resource control instruction to the user equipment to cause the user equipment to reduce its transmission resource to reduce the interference.

According to a third aspect, there is provided a serving cell base station method, comprising: receiving an instruction initiated by a small cell base station experiencing an increase in interference from user equipment being supported by the serving base station; and transmitting a resource control instruction to the user equipment to cause the user equipment to reduce its transmission resource to reduce the interference.

In one embodiment, the resource control instruction comprises at least one of a common enhanced relative grant channel instruction, an enhanced relative grant channel instruction and a high speed shared control channel order. Accordingly, a variety of different messages may be used to carry the resource control instruction.

In one embodiment, the instruction identifies the small cell base station and the resource control instruction is associated with the small cell base station.

In one embodiment, the high speed shared control channel order includes at least one of a cell identifier and an index to a cell identifier.

In one embodiment, the resource control instruction specifies an amount of resource reduction to be applied.

In one embodiment, the resource control instruction specifies a reduction in grant for the user equipment.

In one embodiment, the step of receiving comprises receiving a plurality of the instructions, each identifying a small cell base station and the step of transmitting comprises transmitting a corresponding plurality of the resource control instructions, each associated with one of the small cell base stations. Accordingly, the serving base station may receive one or more of the instructions, each from a different small cell base station, and a corresponding resource control instruction may be transmitted, each of which is associated with that small cell base station.

In one embodiment, the method comprises the step of transmitting user equipment interference criteria to user equipment specifying criteria under which the user equipment is to monitor for the resource control instruction. Accordingly, the criteria under which the user equipment is to monitor for the resource control instructions may be specified to the user equipment.

In one embodiment, the user equipment interference criteria identifies that a received power of downlink signals from the serving cell base station and from the small cell base station should be compared and identifies a difference threshold for which the user equipment is to monitor for the resource control instruction.

In one embodiment, the user equipment interference criteria identifies that a received signal to noise ratio from the serving cell base station and from the small cell base station should be compared and identifies a difference threshold for which the user equipment is to monitor for the resource control instruction.

In one embodiment, the method comprises the step of transmitting a plurality of the user equipment interference criteria, each of the plurality of the user equipment interference criteria being associated with a corresponding one of a plurality of small cell base stations. Accordingly, different interference criteria may be provided on a per-small cell base station basis.

In one embodiment, the method comprises the step of transmitting a control instruction to cause the user equipment to transmit measurement reports.

According to a fourth aspect, there is provided a serving cell base station, comprising: reception logic operable to receive an instruction initiated by a small cell base station experiencing an increase in interference from user equipment being supported by the serving base station; and transmission logic operable to transmit a resource control instruction to the user equipment to cause the user equipment to reduce its transmission resource to reduce the interference.

In one embodiment, the resource control instruction comprises at least one of a common enhanced relative grant channel instruction, an enhanced relative grant channel instruction and a high speed shared control channel order.

In one embodiment, the instruction identifies the small cell base station and the resource control instruction is associated with the small cell base station.

In one embodiment, the high speed shared control channel order includes at least one of a cell identifier and an index to a cell identifier.

In one embodiment, the resource control instruction specifies an amount of resource reduction to be applied.

In one embodiment, the resource control instruction specifies a reduction in grant for the user equipment.

In one embodiment, the reception logic is operable to receive a plurality of the instructions, each identifying a small cell base station and the transmission logic is operable to transmit a corresponding plurality of the resource control instructions, each associated with one of the small cell base stations.

In one embodiment, the transmission logic is operable to transmit user equipment interference criteria to user equipment specifying criteria under which the user equipment is to monitor for the resource control instruction.

In one embodiment, the user equipment interference criteria identifies that a received power of downlink signals from the serving cell base station and from the small cell base station should be compared and identifies a difference threshold for which the user equipment is to monitor for the resource control instruction.

In one embodiment, the user equipment interference criteria identifies that a received signal to noise ratio from the serving cell base station and from the small cell base station should be compared and identifies a difference threshold for which the user equipment is to monitor for the resource control instruction.

In one embodiment, the transmission logic is operable to transmit a plurality of the user equipment interference criteria, each of the plurality of the user equipment interference criteria being associated with a corresponding one of a plurality of small cell base stations.

In one embodiment, the transmission logic is operable to transmit a control instruction to cause the user equipment to transmit measurement reports.

According to a fifth aspect, there is provided a user equipment method, comprising: receiving a resource control instruction transmitted from a serving cell base station in response to an instruction initiated by a small cell base station experiencing an increase in interference from user equipment; and reducing transmission resource to reduce interference.

In one embodiment, the resource control instruction comprises at least one of a common enhanced relative grant channel instruction, an enhanced relative grant channel instruction and a high speed shared control channel order.

In one embodiment, the high speed shared control channel order comprises at least one of a cell identifier and an index to a cell identifier identifying the small cell base station.

In one embodiment, the resource control instruction specifies an amount of transmission resource reduction to be applied.

In one embodiment, the resource control instruction specifies a reduction in grant for the user equipment.

In one embodiment, the method comprises the step of receiving user equipment interference criteria from the serving cell base station specifying criteria under which the user equipment is to monitor for the resource control instruction.

In one embodiment, the user equipment interference criteria identifies that a received power of downlink signals from the serving cell base station and from the small cell base station should be compared and identifies a difference threshold for which the user equipment is to monitor for the resource control instruction.

In one embodiment, the user equipment interference criteria identifies that a received signal to noise ratio from the serving cell base station and from the small cell base station should be compared and identifies a difference threshold for which the user equipment is to monitor for the resource control instruction.

In one embodiment, the method comprises the step of receiving a plurality of user equipment interference criteria from the serving cell base station for each of a plurality of small cell base stations specifying criteria under which the user equipment is to monitor for the resource control instruction.

In one embodiment, the resource control instruction is associated with the small cell base station and the step of reducing transmission resource comprises reducing the transmission resource in response to the resource control instruction associated with the small cell base station when the user equipment interference criteria for the small cell base station are met. Hence, the user equipment will only obey the instruction if the cell ID of that cell meets the criteria, otherwise the instruction will be ignored. It will also be appreciated that this may lead to a user equipment obeying a common ERGCH for a specific neighbour cell.

In one embodiment, the method comprises the step of receiving a plurality of the resource control instructions associated with different small cell base stations and the step of reducing transmission resource comprises reducing the transmission resource in response only one of the resource control instructions associated with the small cell base station when the user equipment interference criteria for the small cell base station are met. Accordingly, should the criteria be met for a number of different small cells and resource control instructions for each of those cells are received, then the transmission resource is reduced in response to only one of those instructions in order to prevent the transmission resources from being reduced too quickly. It will be appreciated therefore that the user equipment may receive more than one such command and the user equipment only reduces the transmission resource by a single step rather than by multiple steps.

In one embodiment, the method comprises the step of ceasing to monitor for resource control instructions associated with a small cell base station within an active set associated with the user equipment. Hence, the user equipment may stop monitoring for the common ERGCH for a cell when that cell is added to its active set. In particular, the user equipment may stop obeying a common ERGCH of a targeted neighbour cell if that targeted neighbour cell is added to its active set.

In one embodiment, the method comprises the step ofreceiving an instruction to cause measurement reports to be transmitted.

According to a sixth aspect, there is provided user equipment, comprising: reception logic operable to receive a resource control instruction transmitted from a serving cell base station in response to an instruction initiated by a small cell base station experiencing an increase in interference from user equipment; and resource control logic operable to reduce transmission resource to reduce interference.

In one embodiment, the resource control instruction comprises at least one of a common enhanced relative grant channel instruction, an enhanced relative grant channel instruction and a high speed shared control channel order.

In one embodiment, the high speed shared control channel order comprises at least one of a cell identifier and an index to a cell identifier identifying the small cell base station.

In one embodiment, the resource control instruction specifies an amount of transmission resource reduction to be applied.

In one embodiment, the resource control instruction specifies a reduction in grant for the user equipment.

In one embodiment, the reception logic is operable to receive user equipment interference criteria from the serving cell base station specifying criteria under which the user equipment is to monitor for the resource control instruction.

In one embodiment, the user equipment interference criteria identifies that a received power of downlink signals from the serving cell base station and from the small cell base station should be compared and identifies a difference threshold for which the user equipment is to monitor for the resource control instruction.

In one embodiment, the user equipment interference criteria identifies that a received signal to noise ratio from the serving cell base station and from the small cell base station should be compared and identifies a difference threshold for which the user equipment is to monitor for the resource control instruction.

In one embodiment, the reception logic is operable to receive a plurality of user equipment interference criteria from the serving cell base station for each of a plurality of small cell base stations specifying criteria under which the user equipment is to monitor for the resource control instruction.

In one embodiment, the resource control instruction is associated with the small cell base station and the resource control logic is operable to reduce the transmission resource in response to the resource control instruction associated with the small cell base station when the user equipment interference criteria for the small cell base station are met.

In one embodiment, the reception logic is operable to receive a plurality of the resource control instructions associated with different small cell base stations and the resource control logic is operable to reduce the transmission resource in response only one of the resource control instructions associated with the small cell base station when the user equipment interference criteria for the small cell base station are met.

In one embodiment, the reception logic is operable to cease monitoring for resource control instructions associated with a small cell base station within an active set associated with the user equipment.

In one embodiment, the reception logic is operable to receive an instruction to cause measurement reports to be transmitted.

According to a seventh aspect, there is provided a computer program product operable, when executed on a computer, to perform the method steps of the first, third or fifth aspects.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates an example HetNet deployment; and
Figure 2 illustrates the example operation of network nodes according to one embodiment.

### DESCRIPTION OF THE EMBODIMENTS

### Overview

Before discussing the embodiments in any more detail, first an overview will be provided. Embodiments provide an arrangement where user equipment which is unable to identify from received downlink transmissions that it is causing interference as a result of its uplink transmissions can be controlled by the base station which is experiencing that interference. Accordingly, when a base station detects interference from user equipment which is not connected to or supported by that base station, a message is generated which is transmitted through the wireless telecommunications network to the serving cell supporting the user equipment so that the user equipment can be instructed to reduce the resources being used for uplink transmissions in order to reduce interference being generated. Such an arrangement is beneficial because neither the user equipment nor the serving cell base station is aware that such interfering transmissions are occurring based on current techniques. Also, whilst the base station such as a small cell base station is able to determine that interference is occurring, the user equipment is not supported, attached or connected to that small cell base station to enable that small cell base station to reduce the transmission resources. Also, because the user equipment is likely to be outside the downlink boundary and, therefore, in the uplink-downlink imbalance zone, even if the small cell base station were to attempt to instruct the user equipment to reduce its transmission resources it is highly unlikely that the user equipment will even be able to decode that instruction.

In order to route the instruction to the correct user equipment, the network will either instruct likely user equipment to make measurements to enable the network to determine the likely interfering user equipment from those measurements using a command. Alternatively, user equipment may be configured to detect when they are likely to be in the uplink-downlink imbalance zone using conventional measurements and, if the user equipment determines that they are in this zone, they will monitor for a command which is specified only for user equipment within that particular zone associated with an individual small cell base station.

Accordingly, this approach has two main steps. In the first step, the small cell base station sends "grant reduction commands" to its neighbouring macro cell base stations when the small cell base station detects high interference. The message can be sent to a radio network controller or mobility management entity which will decide which macro cell base station to send the grant reduction commands to. The grant reduction command indicates the identifier of the small cell that has issued the command.

In the second step, the macro base stations receive the grant reduction command. The macro base stations then react by either broadcasting a common Enhanced Relative Grant Channel (E-RGCH) instruction or sending a legacy E-RGCH instruction to the interfering user equipment. The common E-RGCH instruction can only be received by REL-12 user equipment, which are configured to respond to such instructions when pre-defined criteria are met (as will be explained in more detail below). However, the legacy E-RGCH can be used for both legacy and REL-12 user equipment. However, the macro cell base station will need to identify the interfering user equipment to which such legacy E-RGCH instructions are sent. Identifying the interfering user equipment can be achieved by instructing the user equipment to make measurement reports, or using measurement reports already provided by the user equipment in order to identify likely interfering candidates.

The criteria used by the user equipment to determine whether they need to obey a common E-RGCH instruction can be based on the user equipment's Ec/Io or on the relative power of transmissions from the strongest small cell and from the macro cell. For example, if the relative power between the macro cell and the strongest small cell is less than a threshold amount then the user equipment will obey the common E-RGCH instruction. In this way, only user equipment that may cause high interference to the small cell needs to reduce its grant. The exact criteria to be assessed in order to determine whether the user equipment is within the uplink-downlink imbalance zone is typically signalled to the user equipment using Radio Resource Connection (RRC) messages. Likewise, the value of the threshold is set or varied typically using RRC messages.

It is unlikely that grant reduction commands will be issued very frequently by small cell base stations, since the victim cell (the small cell) would typically need its Rise Over Thermal (RoT), which provides an indication of the interference, to stabilise before issuing another grant reduction command. The grant reduction command can therefore tolerate the delay incurred by going through the network.

The grant reduction command typically contains the amount of grant reduction required by the small cell base station in order to reduce interference from the user equipment to an acceptable level. For example, the small cell base station may determine that a grant reduction of 3 dB is sufficient and may specify that the user equipment is instructed to reduce its grant by 3 dB over, for example, 100 ms.

In a typical HetNet deployment, there will be many small cells within the coverage area of an overlying macro cell. Accordingly, it is beneficial to target user equipment which are causing interference to particular small cell base stations using the grant reduction command. Accordingly, multiple common E-RGCH instructions may be provided where each common E-RGCH instruction corresponds with a specific small cell. For example, a small cell can be linked to a specific Orthogonal Variable Spreading Factor (OVSF) code used by the common E-RGCH instruction associated with that small cell. This means that user equipment only need to monitor the relevant common E-RGCH instruction for a small cell if the criteria for that small cell (such as the corresponding small cell pilot power) meets the criteria.

Although the grant reduction command is typically transmitted by the macro base station, in embodiments the grant reduction command can be sent to an interfering small cell base station and the small cell base station can issue the common E-RGCH command to the user equipment.

It is also possible that instead of sending a common E-RGCH instruction, the serving base station (such as a macro base station) broadcasts a common High Speed-Shared Control Channel (HS-SCCH) order. Unlike the E-RGCH instruction, the HS-SCCH order contains more information bits and therefore can include the small cell ID (or an index to the cell ID). The user equipment receiving the order would then obey the HS-SCCH order based upon pre-defined criteria such as those mentioned above.

Once the small cell has been added to the user equipment's active set, the user equipment can then stop listening to the common E-RGCH instruction (or the common HS-SCCH order) corresponding to the particular small cell which was added to the active set. This is because when a cell is added to the user equipment's active set, the cell can directly instruct the user equipment to reduce its grant and therefore there is no need for the user equipment to listen to the common E-RGCH from the macro cell.

### Example Operation

Figure 2 illustrates the example operation of network nodes according to one embodiment. In particular, Figure 2 shows the HetNet coverage of a macro cell with two small cells, small cell 1 and small cell 2. The coverage of small cell 1 and small cell 2 falls within that of the macro cell. User equipment at point A moves towards small cell 1, going through points B and C.

The macro cell configures to common E-RGCHs, namely E-RGCH1 and E-RGCH2, each using different OVSF codes to differentiate from each other.

The user equipment is configured as follows:
(1) The user equipment will start to monitor for an obey E-RGCH1 if the difference between the pilot power of the macro (serving) cell and that of small cell 1 is less than Δ₁ dB.
(2) The user equipment will start to monitor for an obey E-RGCH2 if the difference between the pilot power of the macro (serving) cell and that of the small cell is less than Δ₂ dB.

Both small cells (small cell 1 and small cell 2) experience high interference and they both send grant reduction commands to the macro cell (in this case, via the RNC). The macro cell then broadcasts the common E-RGCH1 and E-RGCH2. However, whilst the user equipment is at point A, none of the criteria is met by the user equipment and, hence, the user equipment ignores these common E-RGCH transmissions.

The user equipment moves from point A to point B. At point B, the user equipment starts to cause interference to the small cells. The user equipment makes measurements to determine whether it meets any of the configured criteria mentioned above. It will be appreciated that the criteria may be configured using Radio Resource Control (RRC) signalling.

The user equipment detects that the pilot power difference at the user equipment between its macro serving cell and that of small cell 1 falls below Δ₁ dB. The user equipment then starts to monitor for common E-RGCH1. It detects E-RGCH1 and starts obeying its command by reducing its grant. This helps to reduce the interference being experienced by small cell 1.

The user equipment continues to move towards small cell 1 and, at point C, it enters the soft handover region of small cell 1. Small cell 1 is then added to the user equipment's active set which enables small cell 1 to directly control the user equipment's grant by sending direct E-RGCH to the user equipment using existing techniques. The user equipment can then therefore stop listening to common E-RGCH1.

Also at point C, the pilot power difference at the user equipment between the macro serving cell and small cell 2 falls below Δ₂ dB. Since small cell 2 is not in the user equipment's active set, the user equipment will start to monitor for and obey E-RGCH2 and will make any grant reductions commanded to it.

In this example, common E-RGCH1 and E-RGCH2 are sent from the macro serving cell. However, in embodiments, common E-RGCH1 can be sent from small cell 2 and E-RGCH2 sent from small cell 1.

Hence, it can be seen that this arrangement allows common E-RGCH commands from a victim small cell to be detected reliably by an uplink interfering user equipment attached to a macro cell.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A small cell base station method, comprising:
detecting an increase in interference from user equipment being supported by a serving base station; and
transmitting an instruction to cause said serving base station to instruct said user equipment to reduce its transmission resource to reduce said interference.

2. The method of claim 1, wherein said step of transmitting comprises transmitting said instruction to one of a radio network controller, a mobility management entity to determine said serving base station and to said serving base station.

3. The method of claim 1 or 2, wherein said instruction indicates a resource reduction to be applied to transmissions from said user equipment.

4. The method of any preceding claim, wherein said instruction specifies a reduction in grant for said user equipment.

5. The method of any preceding claim, wherein said instruction includes an identifier identifying said small cell base station.

6. The method of any preceding claim, comprising the steps of receiving an instruction initiated by another small cell base station experiencing an increase in interference from user equipment being supported by said serving base station, and transmitting a resource control instruction to said user equipment to cause said user equipment to reduce its transmission resource to reduce said interference.

7. A small cell base station, comprising:
detection logic operable to detect an increase in interference from user equipment being supported by a serving base station; and
transmission logic operable to transmit an instruction to cause said serving base station to instruct said user equipment to reduce its transmission resource to reduce said interference.

8. A serving cell base station method, comprising:
receiving an instruction initiated by a small cell base station experiencing an increase in interference from user equipment being supported by said serving base station; and
transmitting a resource control instruction to said user equipment to cause said user equipment to reduce its transmission resource to reduce said interference.

9. The method of claim 8, wherein said resource control instruction comprises at least one of a common enhanced relative grant channel instruction, an enhanced relative grant channel instruction and a high speed shared control channel order.

10. The method of claim 8 or 9, wherein said instruction identifies said small cell base station and said resource control instruction is associated with said small cell base station.

11. The method of any one of claims 8 to 10, wherein said high speed shared control channel order includes at least one of a cell identifier and an index to a cell identifier.

12. A serving cell base station, comprising:
reception logic operable to receive an instruction initiated by a small cell base station experiencing an increase in interference from user equipment being supported by said serving base station; and
transmission logic operable to transmit a resource control instruction to said user equipment to cause said user equipment to reduce its transmission resource to reduce said interference.

13. A user equipment method, comprising:
receiving a resource control instruction transmitted from a serving cell base station in response to an instruction initiated by a small cell base station experiencing an increase in interference from user equipment; and
reducing transmission resource to reduce interference.

14. User equipment, comprising:
reception logic operable to receive a resource control instruction transmitted from a serving cell base station in response to an instruction initiated by a small cell base station experiencing an increase in interference from user equipment; and
resource control logic operable to reduce transmission resource to reduce interference.

15. A computer program product operable, when executed on a computer, to perform the method steps of any one of claims 1 to 6, 8 to 11 or 13.

## Amended claims

### Amended claims in accordance with Rule 137(2) EPC.

1. A small cell base station method, comprising:
detecting an increase in interference from user equipment being supported by a serving base station;
transmitting an instruction to cause said serving base station to instruct said user equipment to reduce its transmission resource to reduce said interference,
receiving an instruction initiated by another small cell base station experiencing an increase in interference from user equipment being supported by said serving base station;
transmitting a resource control instruction to said user equipment to cause said user equipment to reduce its transmission resource to reduce said interference; and
transmitting user equipment interference criteria specifying criteria under which user equipment is to monitor for said resource control instruction.

2. The method of claim 1, wherein said first step of transmitting comprises transmitting said instruction to one of a radio network controller, a mobility management entity to determine said serving base station and to said serving base station.

3. The method of claim 1 or 2, wherein said instruction indicates a resource reduction to be applied to transmissions from said user equipment.

4. The method of any preceding claim, wherein said instruction specifies a reduction in grant for said user equipment.

5. The method of any preceding claim, wherein said instruction includes an identifier identifying said small cell base station.

6. The method of any preceding claim, wherein said resource control instruction comprises at least one of a common enhanced relative grant channel instruction and a high speed shared control channel order.

7. A small cell base station, comprising:
detection logic operable to detect an increase in interference from user equipment being supported by a serving base station;
reception logic operable to receive an instruction initiated by another small cell base station experiencing an increase in interference from user equipment being supported by said serving base station; and
transmission logic operable to transmit a resource control instruction to cause said serving base station to instruct said user equipment to reduce its transmission resource to reduce said interference, and to transmit interference criteria specifying criteria under which user equipment is to monitor for said resource control instruction.

8. A serving cell base station method, comprising:
receiving an instruction initiated by a small cell base station experiencing an increase in interference from user equipment being supported by said serving base station; and
transmitting a resource control instruction to said user equipment to cause said user equipment to reduce its transmission resource to reduce said interference; and
transmitting user equipment interference criteria specifying criteria under which user equipment is to monitor for said resource control instruction.

9. The method of claim 8, wherein said resource control instruction comprises at least one of a common enhanced relative grant channel instruction and a high speed shared control channel order.

10. The method of claim 8 or 9, wherein said instruction identifies said small cell base station and said resource control instruction is associated with said small cell base station.

11. The method of any one of claims 8 to 10, wherein said high speed shared control channel order includes at least one of a cell identifier and an index to a cell identifier.

12. A serving cell base station, comprising:
reception logic operable to receive an instruction initiated by a small cell base station experiencing an increase in interference from user equipment being supported by said serving base station; and
transmission logic operable to transmit a resource control instruction to said user equipment to cause said user equipment to reduce its transmission resource to reduce said interference and to transmit user equipment interference criteria specifying criteria under which user equipment is to monitor for said resource control instruction.

13. A user equipment method, comprising:
receiving user equipment interference criteria specifying criteria under which user equipment is to monitor for said resource control instruction;
determining when said criteria are met and receiving a resource control instruction transmitted from a serving cell base station in response to an instruction initiated by a small cell base station experiencing an increase in interference from user equipment; and
reducing transmission resource to reduce interference.

14. User equipment, comprising:
reception logic operable to receive user equipment interference criteria specifying criteria under which user equipment is to monitor for a resource control instruction and when said criteria are met to receive said resource control instruction transmitted from a serving cell base station in response to an instruction initiated by a small cell base station experiencing an increase in interference from user equipment; and
resource control logic operable to reduce transmission resource to reduce interference.

15. A computer program product operable, when executed on a computer, to perform the method steps of any one of claims 1 to 6, 8 to 11 or 13.
